# EUROPÄISCHE PATENTANMELDUNG

(11) **EP 2 837 294 A1**
(43) Veröffentlichungstag der Anmeldung: **18.02.2015**
(21) Anmeldenummer: 14168823.4
(22) Anmeldetag: 19.05.2014
(51) Int. Cl.: A24C 5/34

(54) **Verfahren und Vorrichtung zur Ermittlung und/oder Bewertung der Verteilung eines Zusatzstoffs in einem stabförmigen Artikel der Tabak verarbeitenden Industrie**

(30) Priorität: 27.05.2013 DE 102013209816
(71) Anmelder: HAUNI Maschinenbau AG, 21033 Hamburg (DE)
(72) Erfinder: Gürtler, Johannes, 20357 Hamburg (DE); Leichsenring, Nadine, 22844 Norderstedt (DE); Buhl, Alexander, 23974 Blowatz OT Robertsdorf (DE); Horn, Sönke, 21502 Geesthacht (DE); Drews, Ingo, 21509 Glinde (DE); Gast, Hanno, 21256 Handeloh (DE)
(74) Vertreter: Müller Verweyen

(57) **Zusammenfassung**

Ein Verfahren zu Ermittlung, Vermessung und/oder Bewertung einer Eigenschaft eines stabförmigen Artikels der Tabak verarbeitenden Industrie umfasst die optische Erfassung mindestens eines Bildes des Artikels und elektronische Auswertung des erfassten Bildes. Mindestens eine Schnittfläche des Artikels wird optisch erfasst und eine Mehrzahl von Bildbereichen der mindestens einen Schnittflächenabbildung wird jeweils separat ausgewertet.

## Beschreibung

Die Erfindung betrifft ein Verfahren zur Ermittlung, Vermessung und/oder Bewertung einer Eigenschaft eines stabförmigen Artikels der Tabak verarbeitenden Industrie, umfassend die optische Erfassung mindestens eines Bildes des Artikels, und elektronische Bildverarbeitung des erfassten Bildes. Die Erfindung betrifft des Weiteren eine entsprechende Vorrichtung.

Ein Verfahren und eine Vorrichtung dieser Art sind aus der DE 10 2011 082 646 A1 bekannt. Dabei werden mit einer optischen Erfassungseinrichtung ORIS bzw. OCIS der Anmelderin Bilddaten der Umhüllung des Artikels in Umfangsrichtung erfasst. Damit lässt sich jedoch nur eine Eigenschaft unmittelbar unter der Oberfläche des Umhüllungsmaterials oder an der Innenseite des Umhüllungsmaterials, nicht jedoch im Inneren des Artikels, ermitteln.

Die Aufgabe der Erfindung besteht darin, ein Verfahren und eine Vorrichtung bereitzustellen, die mittels optischer Erfassung eine genaue, objektive, umfassende und/oder reproduzierbare Ermittlung, Vermessung und/oder Bewertung einer Eigenschaft des stabförmigen Artikels ermöglicht.

Die Erfindung löst diese Aufgabe mit den Merkmalen der unabhängigen Ansprüche. Durch die optische Erfassung mindestens einer Oberfläche, insbesondere einer Schnitt- bzw. Stirnfläche des Artikels, anstelle der bekannten Erfassung in Umfangsrichtung, können Eigenschaften auch im Inneren des Artikels untersucht werden. Erfindungsgemäß wird eine Mehrzahl von Bildbereichen der mindestens einen Schnittflächenabbildung jeweils separat ausgewertet. Dies ermöglicht auf einfache Weise eine genaue, objektive und reproduzierbare Ermittlung und/oder Bewertung der Eigenschaft sowohl im Querschnitt als auch entlang der Längsachse des Artikels.

Unter stabförmigen Artikeln der Tabak verarbeitenden Industrie werden insbesondere Zigaretten, Filterstäbe, Multisegmentfilterstäbe, Teile davon oder Teile von Filtersträngen verstanden. Die zu untersuchende Eigenschaft des stabförmigen Artikels kann insbesondere die Verteilung eines Zusatzstoffs in einem Filterstab sein. Zusatzstoffe sind Stoffe, die dem Filtergrundmaterial, meist Filtertow aus Acetat, zugesetzt werden, insbesondere Aktivkohlegranulat oder -pulver, aber beispielsweise auch andere Granulate, Pulver oder Stoffe. Dabei ist häufig eine gleichmäßige Verteilung des Zusatzstoffs über einen Bereich oder ein Segment des Filterstabs erwünscht.

Im Folgenden wird die Erfindung überwiegend anhand der Verteilung von Zusatzstoffen bzw. eingebrachten Stoffen in Filterstäben erläutert. Die zu untersuchende Eigenschaft ist aber nicht auf die Verteilung von Zusatzstoffen in Filterstäben beschränkt. Beispielsweise kann auch der innere Aufbau oder andere innere Eigenschaften von Filterstäben untersucht werden, wie innere Kapselkammern von Filtern mit Aromakapseln, innere Hohlkammern von Hohlkammerfiltern, innere Rillenbereiche von Profil- bzw. CP-/CPF-Filterstäben oder innere Eigenschaften von Multisegmentfiltern wie beispielsweise innere Segmentübergänge.

Zur Ermittlung und/oder Bewertung einer ein- oder zweidimensionalen Verteilung des Zusatzstoffs in der Schnittfläche wird eine Schnittflächenabbildung vorteilhaft in mehrere Unterbereiche unterteilt. Die Verteilung des Zusatzstoffs in der Schnittfläche kann vorteilhaft die eindimensionale radiale Verteilung, die eindimensionale Winkel- oder Sektorenverteilung oder die vollständige zweidimensionale Verteilung, insbesondere durch Kombination der radialen Verteilung und der Sektorenverteilung, umfassen.

Zur Ermittlung und/oder Bewertung der (Polar-)Winkelverteilung des Zusatzstoffs, die nachfolgend auch als Sektorenverteilung bezeichnet wird, wird eine Schnittflächenabbildung vorteilhaft in mehrere vorzugsweise flächengleiche Sektoren unterteilt. Die Sektorenverteilung des Zusatzstoffes ist beispielsweise empfindlich auf den Towlauf und Falten im Tow in einer Filterstabherstellmaschine der Tabak verarbeitenden Industrie.

Zur Ermittlung und/oder Bewertung der radialen Verteilung des Zusatzstoffs, welche nachfolgend auch als Ringverteilung bezeichnet wird, wird eine Schnittflächenabbildung vorteilhaft in mehrere konzentrische Ringe unterteilt. Die Ringverteilung des Zusatzstoffes ist beispielsweise empfindlich auf Einflüsse der Transportdüse und der Dosierbreite in einer Filterstabherstellmaschine der Tabak verarbeitenden Industrie.

Die Sektorenverteilung und die Ringverteilung des Zusatzstoffs stellen somit jeweils komplementäre, wertvolle Informationen über die Herstellung der untersuchten Filterstäbe zur Verfügung. Zur bevorzugten Ermittlung und/oder Bewertung der zweidimensionalen Verteilung des Zusatzstoffs wird eine Schnittflächenabbildung vorteilhaft in mehrere Sektoren und in mehrere konzentrische Ringe unterteilt.

Unter Sektoren werden im Rahmen der Erfindung insbesondere Kreissektoren, aber beispielsweise auch Sektoren von ovalen oder elliptischen Flächen verstanden.

Zur Ermittlung und/oder Bewertung der axialen Verteilung des Zusatzstoffs werden vorteilhaft Abbildungen einer Mehrzahl von axial beabstandeten Schnittflächen ausgewertet. Beispielsweise kann ein Filterstab in eine Mehrzahl von Abschnitten geschnitten werden und die Schnittfläche jedes Abschnitts wird dann separat ausgewertet. Dies ermöglicht auch die bevorzugte Ermittlung und/oder Bewertung einer dreidimensionalen Verteilung des Zusatzstoffs in dem stabförmigen Artikel.

Vorzugsweise weisen die auszuwertenden Bildbereiche jeweils gleiche Flächeninhalte auf.

In einer besonders bevorzugten Ausführungsform werden die zu untersuchenden Schnittflächen mittels eines Kreismesserschnitts erzeugt. Es hat sich nämlich gezeigt, dass die Erzeugung einer zu untersuchenden Schnittfläche mittels eines nicht kreisförmigen Messers zu Verfälschungen der Verteilung des Zusatzstoffs führt, beispielsweise durch Verdrängung des Zusatzstoffes im Bereich des Messereintritts und vermehrter Erzeugung von Zusatzstoffstaub durch zerstörte Zusatzstoffpartikel.

Eine Vorrichtung zur Durchführung des geschilderten Verfahrens umfasst vorzugsweise eine Durchleuchtungseinrichtung für die Bestimmung der Positionen einer inneren Struktur in dem Artikel. Dies kann beispielsweise die Position von eingebrachten Objekten wie Kapseln oder einem Faden, rillenförmigen Hohlräumen in einem Profilfilterstab oder von Materialübergängen, beispielsweise in Multisegmentfilterstäben, sein.

Die bestimmte Position der inneren Struktur wird vorteilhaft für die automatisierte Bestimmung optimaler Schnittpositionen in dem stabförmigen Artikel verwendet, auf deren Grundlage eine Schneideinrichtung betrieben wird. Die Durchleuchtungseinrichtung kann eine optische Einrichtung sein, vorzugsweise arbeitend mit Licht im sichtbaren Wellenlängenbereich. Alternativ kann die Durchleuchtungseinrichtung einen Mikrowellensensor (MIDAS^{®}) oder eine Infrarotdurchleuchtung (IRIS^{®}) umfassen.

In einem bevorzugten Auswerteverfahren wird zunächst für jeden auszuwertenden Bildbereich die Anzahl der Bildpixel ermittelt, deren Wert eine bestimmte Bedingung erfüllt, insbesondere einen bestimmten Helligkeitsschwellwert unter- oder überschreitet. Vorzugsweise wird dann für jeden auszuwertenden Bildbereich eine Abweichung Δ der so ermittelten Pixelanzahl von einem Sollwert, insbesondere einem statistisch zu erwartenden Sollwert (Erwartungswert) bestimmt. Die Summe ∑Δ der Abweichungen Δ sämtlicher Bereiche ist dann beispielsweise eine Qualitätsangabe über die Gleichmäßigkeit der Verteilung des Zusatzstoffes über die Schnittfläche.

Vorzugsweise wird pro Auswertung ein Mittelwert über eine Mehrzahl von Artikeln, vorzugsweise im Bereich von fünf bis fünfzig Artikeln, gebildet, damit starke Abweichungen einzelner Artikel nicht zu einer Verfälschung des Ergebnisses führen.

Die Erfindung wird im Folgenden anhand bevorzugter Ausführungsformen unter Bezugnahme auf die beigefügten Figuren erläutert. Dabei zeigt:
- Fig. 1: eine schematische Darstellung einer erfindungsgemäßen Vorrichtung;
- Fig. 2: eine perspektivische Ansicht einer optischen Bilderfassungseinrichtung in einer Ausführungsform der Erfindung;
- Fig. 3: eine Unterteilung einer auszuwertenden Schnittfläche in Quadranten;
- Fig. 4: eine Tabelle zur Erläuterung einer Auswertung der gemäß Figur 3 unterteilten Schnittfläche;
- Fig. 5: eine Unterteilung einer auszuwertenden Schnittfläche in konzentrische Ringe;
- Fig. 6: eine Tabelle zur Erläuterung einer Auswertung der gemäß Figur 5 unterteilten Schnittfläche;
- Fig. 7: eine Unterteilung einer auszuwertenden Schnittfläche in Quadranten und konzentrische Ringe;
- Fig. 8: eine schematische Darstellung eines in eine Mehrzahl von axialen Abschnitten zerschnittenen Filterstabs;
- Fig. 9: ein schematisches Ablaufdiagramm für Auswertealgorithmen;
- Fig. 10A-13B: schematische Ansichten von Ausführungsformen der erfindungsgemäßen Vorrichtung;
- Fig. 14, 15: schematische Schnittflächendarstellungen zur Erläuterung verschiedener Auswertungsmöglichkeiten;
- Fig. 16, 17: beispielhafte Schnittflächenabbildungen und Bildrasterungen von Filterstäben; und
- Fig. 18: eine schematische Schnittflächenabbildung eines Profilfilters.

Die Vorrichtung 10 zur Ermittlung, Vermessung, Quantifizierung und/oder Bewertung einer Eigenschaft, beispielsweise der Verteilung eines Zusatzstoffs in einem stabförmigen Artikel 16 der Tabak verarbeitenden Industrie umfasst eine Schneideinrichtung 12, eine optische Bilderfassungseinrichtung 14 und eine elektronische Auswerteeinrichtung 23. Im Folgenden wird als zu untersuchender stabförmiger Artikel 16 beispielsweise ein mit Aktivkohle versetzter Filterstab bzw. Filterstababschnitt betrachtet.

Die Schneideinrichtung 12 weist ein rotierendes Messer 13, insbesondere ein rotierendes Kreismesser, zum Erzeugen mindestens einer qualitativ hochwertigen Stirn- bzw. Querschnittsfläche 18 des Filterstabs 16 auf. Dies können endseitige Stirnflächen eines Filterstabs oder Querschnitte durch einen Filterstab oder ein Filterstabsegment sein. Der Begriff Filterstab schließt generell Multisegmentfilterstäbe mit ein. Die Schneideinrichtung 12 kann beispielsweise in die Bilderfassungseinrichtung 14 integriert oder eine eigenständige Einheit sein.

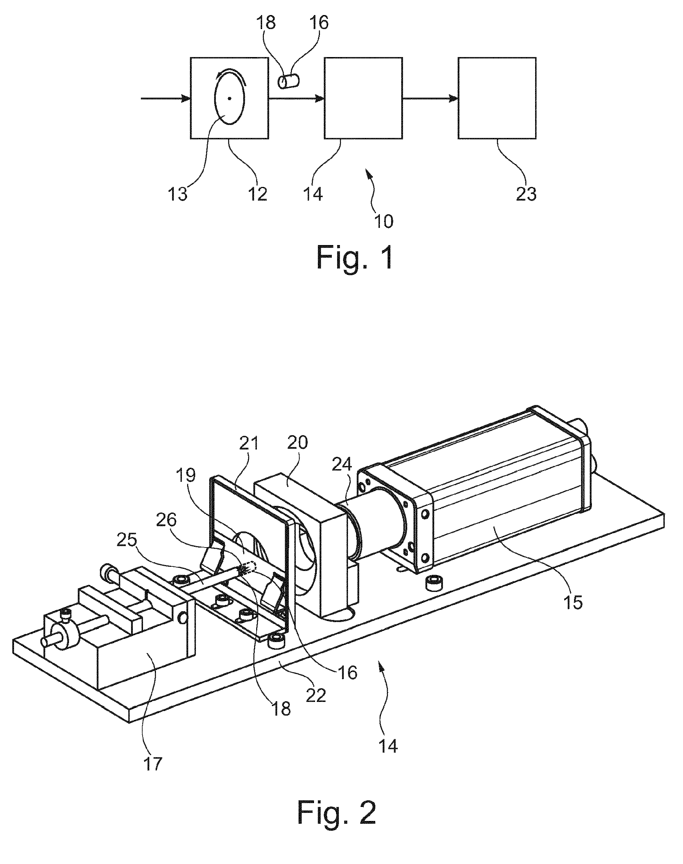

Der zu untersuchende Filterstab 16 wird einer optischen Bilderfassungseinrichtung 14 zugeführt. Eine Ausführungsform einer Bilderfassungseinrichtung 14 zur Offline-Messung ist beispielsweise in Figur 2 gezeigt. Die Bilderfassungseinrichtung 14 umfasst insbesondere eine Kamera 15 mit einem Objektiv 24 und einen Manipulator 17 zur Handhabung des zu untersuchenden Filterstabs 16 derart, dass die zu untersuchende Schnittfläche 18 des Filterstabs 16 im Blickfeld der Kamera 15 liegt. Der Manipulator 17 kann beispielsweise ein verstellbares Führungsrohr 25 aufweisen, das an der der Kamera 15 zugewandten Seite beispielsweise einen oder mehrere Dorne 26 zum Aufstecken des Filterstabs 16 aufweist. Mittels der Kamera 15 wird ein hochauflösendes Bild einer zu untersuchenden Stirn- bzw. Schnittfläche 18 des in dem Manipulator 17 gehaltenen Filterstabs 16 aufgenommen. Hochauflösend bedeutet, dass die Anzahl der Bildpixel in der Schnittflächenabbildung mindestens 1.000, vorzugsweise mindestens 10.000, weiter vorzugsweise mindestens 100.000, beispielsweise etwa 300.000 beträgt. Die Kamera 15 ist vorzugsweise eine Flächenkamera.

Die Bilderfassungseinrichtung 14 kann einen vorzugsweise transparenten Anschlag 19, beispielsweise in Form einer Glasplatte, für die zu untersuchende Schnittfläche 18 aufweisen, insbesondere um sicherzustellen, dass die zu untersuchende Schnittfläche 18 im Fokus der Kamera 15 liegt. Der Anschlag 19 wird von einem hier blendenförmigen Halter 21 gehalten. Die Kamera 15 kann einen festen Fokus haben, der zweckmäßigerweise auf den Anschlag 19 ausgerichtet ist. Alternativ kann die Kamera 15 einen variablen Fokus aufweisen und insbesondere autofokussierend sein. Die Bilderfassungseinrichtung 14 kann eine Beleuchtungseinrichtung 20 zur Beleuchtung der zu untersuchenden Stirnfläche 18 aufweisen, insbesondere in Form einer Ringleuchte und beispielsweise mit LEDs als Leuchtmitteln. Die Elemente 15, 17, 20, 21 der Bilderfassungseinrichtung 14 sind vorzugsweise auf einer gemeinsamen Grundplatte 22 montiert.

Die aufgenommenen Bilder werden an eine elektronische Auswerteeinheit 23, insbesondere einen Computer oder eine digitalelektronische Datenverarbeitungseinrichtung, zur weiteren Auswertung weitergeleitet. Im Folgenden werden in der Auswerteeinheit 23 insbesondere per Software durchgeführt Auswerteverfahren zur Ermittlung und/oder Bewertung der Verteilung des Zusatzstoffs in dem stabförmigen Artikel 16 in verschiedenen Ausführungsformen erläutert.

Vor der Auswertung von Bildbereichen wird jede Abbildung vorzugsweise einer Dunkel-Hell-Beurteilung bzw. Schwarz-Weiß-Beurteilung unterzogen. Dabei wird für jedes einzelne Pixel der Schnittflächenabbildung festgestellt, ob der Pixelwert, der als Graustufenwert vorliegt, einen bestimmten Helligkeitsschwellwert über- oder unterschreitet. Pixel, die den Helligkeitsschwellwert unterschreiten, werden als dunkle Pixel oder schwarze Pixel eingestuft. Ein dunkles Pixel bedeutet, dass an der entsprechenden Stelle der Schnittfläche eine bestimmte Menge Zusatzstoff vorhanden ist. Einem dunklen Pixel kann beispielsweise ein Pixelwert Null (oder Eins) zugeordnet werden. Pixel, die den Helligkeitsschwellwert überschreiten, werden als helle Pixel oder weiße Pixel eingestuft. Ein helles Pixel bedeutet, dass an der entsprechenden Stelle der Schnittfläche kein oder nur wenig Zusatzstoff vorhanden ist. Einem hellen Pixel kann beispielsweise ein Pixelwert Eins (oder Null) zugeordnet werden. Da die hellen Pixel für die Ermittlung der Verteilung des Zusatzstoffs keine Rolle spielen, können die weißen Pixel in der weiteren Verarbeitung außer Betracht bleiben.

Die Schwarz-Weiß-Beurteilung und/oder die nachfolgende Bewertung ist zweckmäßigerweise auf die Schnittflächenabbildung begrenzt, d.h. dass Bildbereiche außerhalb des Artikels 16 vorzugsweise außer Betracht bleiben. Um dies zu erreichen, wird vorzugsweise eine Bestimmung der Umfangslinie 27 des Artikels 16 per Bildverarbeitung, beispielsweise mittels Kantenfilter oder dergleichen in der Auswerteeinrichtung 23 durchgeführt. Es ist aber auch denkbar, aus den bekannten Abmessungen der Schnittfläche einen auszuwertenden Bildbereich vorzugeben.

Zur Ermittlung und/oder Bewertung einer Verteilung des Zusatzstoffs in einer Schnittfläche 18 des Artikels 16 wird die entsprechende Schnittflächenabbildung in eine Mehrzahl von Unterbereichen geteilt. Die Unterbereiche sind vorzugsweise regelmäßig angeordnet und/oder gleich groß.

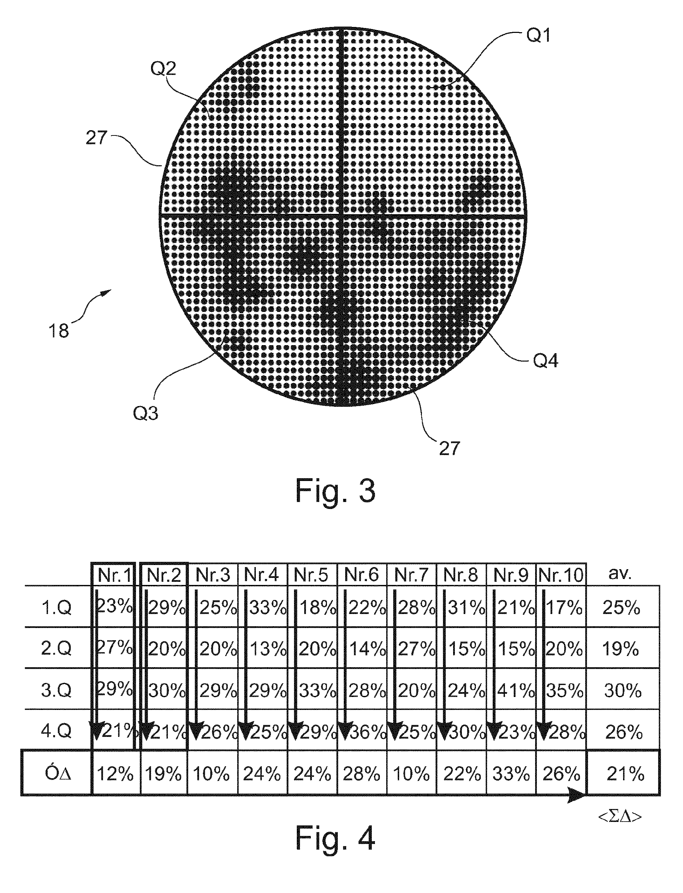

Zur Ermittlung und/oder Bewertung einer Sektorenverteilung des Zusatzstoffs in einer Schnittfläche 18 des Artikels 16 wird die Schnittflächenabbildung vorteilhaft in Sektoren unterteilt. Sektoren sind tortenstückartige Bereiche, die von einem fiktiven Mittelpunkt oder von dem Flächenschwerpunkt der Schnittflächenabbildung ausgehen und von zwei Radien und einem entsprechenden Bogenstück der Umfangslinie 27 begrenzt werden. In Figur 3 ist eine Ausführungsform mit vier gleichmäßigen Sektoren, d.h. vier Quadranten Q1 bis Q4 gezeigt. Eine andere Unterteilung mit einer anderen Anzahl von Sektoren ist möglich, beispielsweise in Sextanten, Oktanten, etc.

Insbesondere bei einer Ermittlung und/oder Bewertung einer Sektorenverteilung des Zusatzstoffs wird vor der Auswertung vorteilhaft die Winkelausrichtung des Artikels 16 in der Bilderfassungseinrichtung 14 bestimmt. Dies kann insbesondere per Bildauswertung erfolgen, indem die Winkelposition einer Überlappung des Umhüllungspapiers des Artikels 16 ermittelt wird. Auf eine Ermittlung der Winkelausrichtung des Artikels 16 kann verzichtet werden, wenn der Artikel 16 mit vorbestimmter Winkelausrichtung in die Bilderfassungseinrichtung 14 eingesetzt oder in der Bilderfassungseinrichtung 14 ausgerichtet wird, beispielsweise immer mit Überlappung des Umhüllungspapiers nach oben.

In der Ausführungsform gemäß Figur 3 wird in jedem Quadranten zunächst die Anzahl der schwarzen bzw. dunklen Pixel gezählt. Dieser Wert ist in der in Figur 4 gezeigten Tabelle in der Spalte für den Artikel Nr. 1 eingetragen. Die angegebenen Prozentwerte beziehen sich auf die Gesamtzahl sämtlicher schwarzen Pixel in der Schnittflächenabbildung; es kann stattdessen auch die absolute Pixelzahl, oder ein anderer Relativwert verwendet werden. Im vorliegenden Beispiel liegen für den Artikel Nr. 1 23% aller schwarzen Pixel im 1. Quadranten, 27% aller schwarzen Pixel im 2. Quadranten, 29% aller schwarzen Pixel im 3. Quadranten und 21% aller schwarzen Pixel im 4. Quadranten.

Anschließend wird für jeden Quadranten eine betragsmäßige Abweichung Δ (Fehler) der ermittelten Pixelanzahl von einem statistischen Sollwert bestimmt. Der statistische Sollwert eines Quadranten sind 25%, wenn die Soll-Verteilung des Zusatzstoffs über die Schnittfläche homogen ist. Die Abweichung Δ beträgt demnach für den 1. Quadranten |23%-25%|=2%, für den 2. Quadranten 2%, für den 3. Quadranten 4% und für den für den 4. Quadranten 4%. Sodann wird die Summe ∑Δ der Abweichungen Δ sämtlicher Quadranten gebildet, hier demnach 12%. Dieser Wert ist im untersten Feld in der Spalte Nr. 1 angegeben. Die Summe ∑Δ kann auch als Verbesserungspotential bezeichnet werden.

Vorzugsweise wird ein Mittelwert über eine Mehrzahl von Artikeln, vorzugsweise im Bereich von fünf bis fünfzig Artikeln, hier beispielsweise zehn Artikel Nr. 1 bis Nr. 10 gebildet. Die Summe ∑Δ beträgt für den Artikel Nr. 1 12% (s.o.), für den Artikel Nr. 2 19%, für den Artikel Nr. 3 10%, etc. Der Mittelwert <∑Δ> der Summen ∑Δ beträgt hier 21%. Dieser Wert ist im Feld unten rechts der Tabelle gemäß Figur 4 angegeben. Der Wert <∑Δ> ist ein Maß für die Gleichmäßigkeit der Sektorenverteilung des Zusatzstoffs über die betrachtete Schnittfläche. Bei einer ideal homogenen Sektorenverteilung wäre der Wert <∑Δ> Null. Je höher der Wert <∑Δ>, desto stärker die Abweichung der Sektorenverteilung von der ideal homogenen Verteilung. Anstelle des Werts <∑Δ> kann auch ein auf die Zahl n der Artikel normierte Wert <∑Δ>/n, hier 2,1%, oder ein anderer geeigneter Relativ- oder Absolutwert betrachtet werden.

Der Wert <∑Δ> oder damit zusammenhängende Werte sind nicht die einzige Möglichkeit, einen für die Gleichmäßigkeit der Sektorenverteilung des Zusatzstoffs aussagekräftigen Wert zu erhalten. Eine andere Möglichkeit wäre beispielsweise, zunächst nicht die Abweichung Δ für jeden Quadranten und jeden Artikel zu bilden, sondern zunächst für jeden Quadranten den Mittelwert der ermittelten Pixelanzahl. Dieser ist in der in Tabelle gemäß Figur 4 in der äußerst rechten Spalte für sämtliche Quadranten gezeigt. Sodann wird die Abweichung des Mittelwerts von dem statistisch zu erwartenden Sollwert (25%) gebildet, demnach 0%, 6%, 5% und 1%. Sodann werden diese Werte addiert (hier 12%), um einen für die Gleichmäßigkeit der Sektorenverteilung des Zusatzstoffs aussagekräftigen Wert ∑Δ<> zu erhalten. Stattdessen kann auch ein auf die Anzahl der Unterbereiche (hier vier) normierter Relativwert, hier 3%, oder ein anderer geeigneter Relativ- oder Absolutwert betrachtet werden.

Ein weiterer für die Gleichmäßigkeit der Sektorenverteilung des Zusatzstoffs aussagekräftiger Wert wäre beispielsweise die Summe der Mittelwerte der Abweichungen ∑<Δ> über sämtliche betrachteten Artikel. Andere Werte sind denkbar.

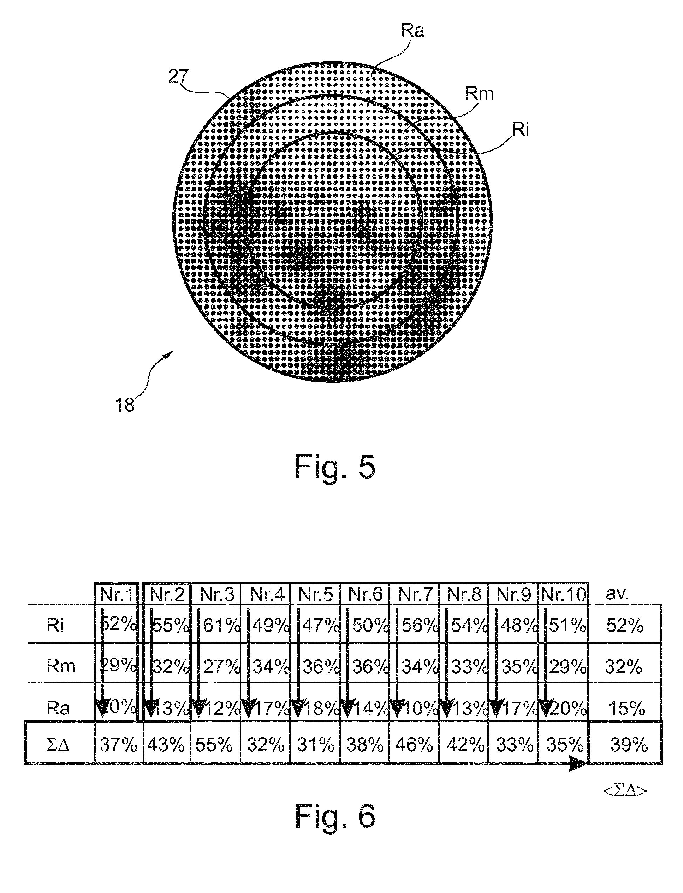

Zur Ermittlung und/oder Bewertung einer radialen Verteilung des Zusatzstoffs in einer Schnittfläche 18 des Artikels 16 wird die Schnittflächenabbildung in konzentrische Ringe um einen fiktiven Mittelpunkt der Schnittflächenabbildung unterteilt. In Figur 5 ist eine Ausführungsform mit drei konzentrischen Ringen, nämlich einem äußeren Ring Ra, einem mittleren Ring Rm und einem inneren Ring Ri gezeigt. Eine andere Anzahl von Ringen ist möglich. Die Ringe weisen vorteilhaft gleiche Flächen auf. Demnach nimmt die radiale Breite der Ringe von innen nach außen vorteilhaft ab, wie auch in Figur 5 zu sehen ist. Die beispielhaft in Figur 6 gezeigte Auswertung kann analog zu der Auswertung gemäß Figur 4 erfolgen, wobei die statistisch zu erwartende Pixelzahl für jeden Ring bei homogener Sollverteilung des Zusatzstoffs 33,3% beträgt. Der radiale Wert <∑Δ> beträgt hier 39%. Die Ringverteilung des Zusatzstoffs ist in diesem Beispiel daher wesentlich ungleicher als die Sektorenverteilung.

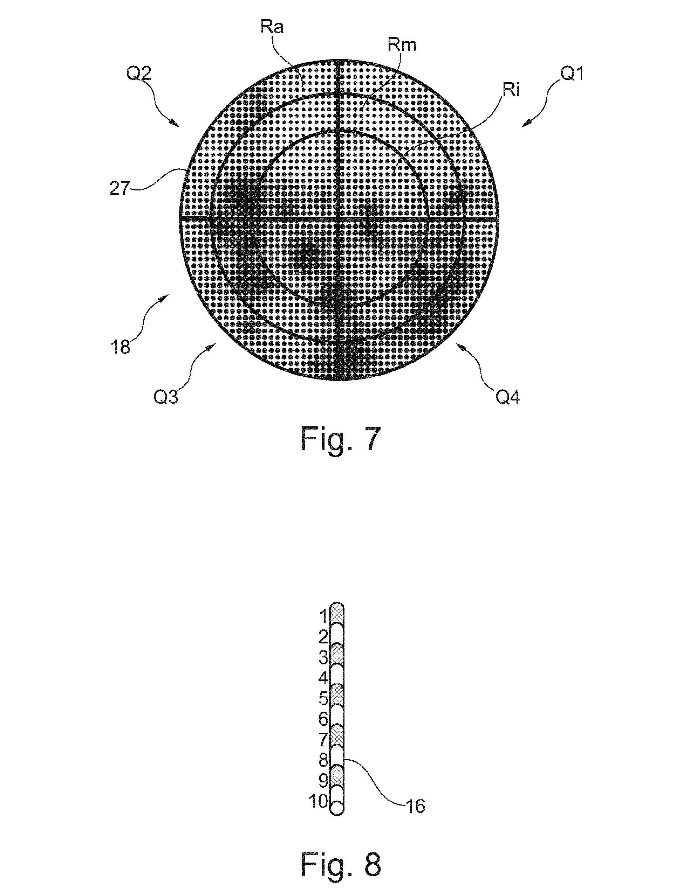

Zur Ermittlung und/oder Bewertung einer zweidimensionalen Verteilung des Zusatzstoffs in einer Schnittfläche 18 des Artikels 16 wird die Schnittflächenabbildung vorteilhaft in Sektoren und zusätzlich in konzentrische Ringe um einen fiktiven Mittelpunkt der Schnittflächenabbildung unterteilt. Figur 7 zeigt ein Beispiel, wo die Schnittflächenabbildung in vier Quadranten und zusätzlich in drei konzentrische Ringe unterteilt wird. Es werden somit zwölf jeweils gleich große Unterbereiche ausgewertet. Die Auswertung kann analog zu der Auswertung gemäß den Figuren 4 und 6 erfolgen.

Zur Ermittlung und/oder Bewertung einer axialen Verteilung des Zusatzstoffs in einem stabförmigen Artikel 16 der Tabak verarbeitenden Industrie wird der Artikel 16, wie in Figur 8 schematisch dargestellt, mittels der Schneideinrichtung 12 in eine Mehrzahl, hier beispielsweise zehn, von vorzugsweise gleich langen Abschnitten 16-1, 16-2, ... geschnitten. Dadurch wird eine Mehrzahl zu untersuchender Querschnitte entlang der Längs- bzw. Axialrichtung des Artikels 16 erzeugt, vorteilhaft mit äquidistanten Abständen über die axiale Länge des Artikels 16 verteilt, um das gesamte Volumen des Artikels 16 gleichmäßig zu erfassen. Jeweils eine Schnittfläche eines jeden Abschnitts 16-1, 16-2, ... wird nachfolgend ausgewertet. Die auszuwertenden Bildbereiche sind hier also die Schnittflächenabbildungen jeweils einer Stirnfläche der Abschnitte 16-1, 16-2, ..., wobei für eine rein axiale Verteilung keine Unterteilung der Schnittflächenabbildungen vorzunehmen ist. Die Auswertung kann analog zu den Figuren 4 und 6 erfolgen.

Zur Ermittlung und/oder Bewertung einer dreidimensionalen Verteilung des Zusatzstoffs in einem stabförmigen Artikel 16 der Tabak verarbeitenden Industrie ist eine Kombination der Auswertungen gemäß Figuren 7 und 8 vorteilhaft. D.h. der stabförmige Artikel 16 wird mittels der Schneideinrichtung 12 in eine Mehrzahl von gleich langen Abschnitten 16-1, 16-2, ... zerschnitten und jeweils eine Stirnfläche der Abschnitte 16-1, 16-2,... wird beispielsweise gemäß Figur 7 unterteilt, so dass insgesamt n x m Unterbereiche (n: Zahl der Abschnitte; m: Zahl der Unterbereiche pro Schnittfläche) ausgewertet werden, im obigen Beispiel also 120 Unterbereiche.

Eine Kombination der Auswertungen gemäß Figuren 3 und 8 sowie gemäß Figuren 5 und 8 ist ebenfalls denkbar.

Das Ergebnis der Auswertung hängt von der Beladung des Zusatzstoffes (beispielsweise in mg pro mm Stablänge) und von der Korngröße ab. Ohne weitere Maßnahmen ist daher ein aussagekräftiger Vergleich von Bewertungen nur für gleiche Beladungen und gleiche Korngröße des Zusatzstoffs, insbesondere bei gleicher Filterspezifikation, möglich. Zum Vergleich von Artikeln mit unterschiedlicher Beladung und/oder Korngröße ist es denkbar, eine entsprechende Normierung oder Kalibrierung in der Auswerteeinrichtung 23 durchzuführen. Dies kann beispielsweise mittels entsprechender, in der Auswerteeinrichtung 23 gespeicherter Kalibrierkurven (beispielsweise Wert <∑Δ> über der Beladung in mg/mm) geschehen. Es ist auch denkbar, empirisch ermittelte Mittelwertkurven als Qualitätsmaßstab in der Auswerteeinrichtung 23 zu speichern.

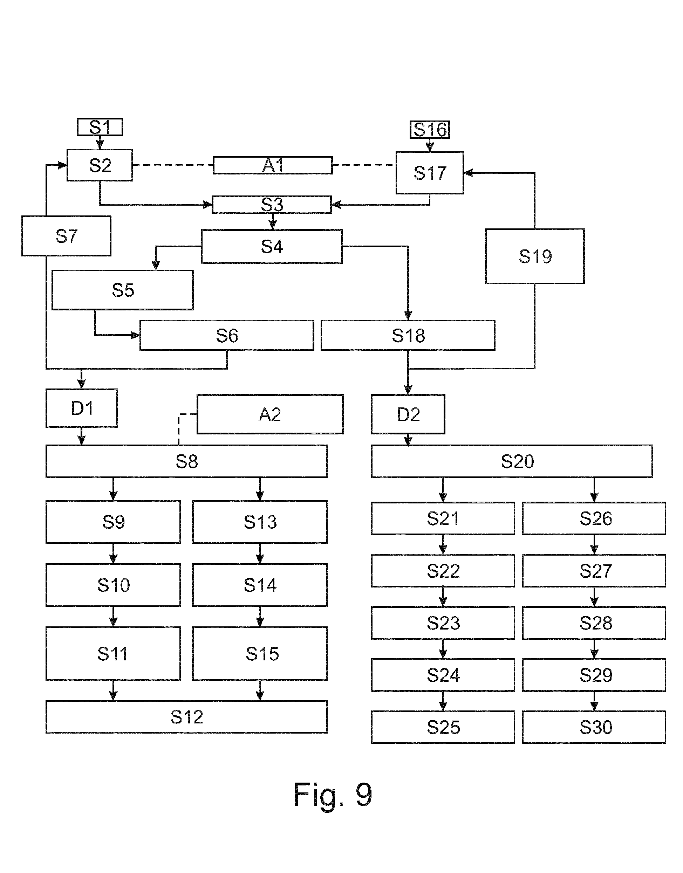

Im Folgenden wird der Ablauf beispielhafter Auswertealgorithmen anhand von Figur 9 erläutert.

Ein Algorithmus zur Ermittlung und/oder Bewertung einer ein- oder zweidimensionalen Verteilung des Zusatzstoffs in der zu untersuchenden Schnittfläche startet im Schritt S1. Im Schritt S2 wird der Filter x (x = 1 bis n, beispielsweise n = 10) in die Bilderfassungsvorrichtung 14 eingelegt. Dabei ist auf die richtige Ausrichtung des Artikels in der Bilderfassungsvorrichtung 14 zu achten (Anmerkung A1), beispielsweise soll ein Überlappungsbereich eines Umhüllungsstreifens des Artikels immer oben liegen. Im Schritt S3 wird der Auslöser der Kamera 15 betätigt. Auf diese Weise wird ein Foto mit beispielsweise 300.000 Pixeln von der zu untersuchenden Schnittfläche des Artikels erzeugt (S4). Die Schnittflächenabbildung wird in Schritt S5 per Bildauswertung in beispielsweise zwölf Unterbereiche, nämlich drei Ringe und vier Quadranten, unterteilt, siehe Figur 7. In jedem Unterbereich wird im Schritt S6 separat die Anzahl der hellen und der dunklen Pixel ermittelt. Die Schritte S2 bis S6 werden für jeden zu untersuchenden Artikel x durchgeführt, Schritt S7.

Die in den Schritten S2 bis S7 ermittelten Daten D1 werden nachfolgend ausgewertet. Dabei wird im Schritt S8 zunächst die Anzahl der dunklen Pixel pro Schnittfläche auf 100% gesetzt. Die ideale Verteilung beträgt in dem obigen Beispiel 33,3% schwarzer Pixel pro Ring und schwarzer Pixel 25% pro Quadrant (Anmerkung A2).

Zur Ermittlung und/oder Bewertung der radialen Verteilung wird im Schritt S9 pro Ring die Abweichung Δ der gemessenen Anzahl der schwarzen Pixel von der idealen Verteilung bestimmt. Sodann wird im Schritt S10 die Summe ∑Δ aus den Abweichungen Δ der Ringe gebildet. Schließlich wird im Schritt S11 der Mittelwert <∑Δ> über die beispielsweise zehn Schnittflächen der untersuchten Artikel gebildet.

Zur Ermittlung und/oder Bewertung der Sektorenverteilung wird im Schritt S13 pro Quadrant die Abweichung Δ der gemessenen Anzahl der schwarzen Pixel von der idealen Verteilung bestimmt. Sodann wird im Schritt S14 die Summe ∑Δ aus den Abweichungen Δ der Quadranten gebildet. Schließlich wird im Schritt S15 der Mittelwert <∑Δ> über die beispielsweise zehn Schnittflächen der untersuchten Artikel gebildet. Die Ermittlung und/oder Bewertung der Sektorenverteilung in den Schritten S13 bis S15 kann alternativ oder vorteilhaft zusätzlich zu der Ermittlung und/oder Bewertung der radialen Verteilung gemäß den Schritten S9 bis S11 erfolgen.

In dem Schritt S12 erfolgt eine Darstellung der in den Schritten S9 bis S11 und/oder S134 bis S15 ausgewerteten bzw. ermittelten Werte beispielsweise in einem Diagramm. Es kann auch ein Vergleich zu den bekannten Werten der Serienartikel, insbesondere Serienfilter erfolgen.

Ein Algorithmus zur Ermittlung und/oder Bewertung der axialen Verteilung des Zusatzstoffs entlang der Längsachse eines zuvor in mehrere Segmente geschnittenen Filterstabs startet im Schritt S6. Im Schritt S17 wird das Segment y des Filters x (x = 1 bis n, beispielsweise n = 10; y = 1 bis m, beispielsweise y = 10) in die Bilderfassungsvorrichtung 14 eingelegt. Dabei ist ebenfalls auf die richtige Ausrichtung des Artikels in der Bilderfassungsvorrichtung 14 zu achten (Anmerkung A1). Die Schritte S3 und S4 wurden bereits erläutert. Bei der axialen Auswertung muss keine Unterteilung der Schnittflächen in Unterbereiche erfolgen; es können jeweils die gesamten Schnittflächen der verschiedenen Segmente ausgewertet werden. In jeder Schnittfläche wird im Schritt S18 separat die Anzahl der hellen und der dunklen Pixel ermittelt. Die Schritte S17, S3, S4, S18 werden für jeden zu untersuchenden Artikel x und für jedes Filterstabsegment y durchgeführt, Schritt S7.

Die in den Schritten S17, S3, S4, S18, S19 ermittelten Daten D2 werden nachfolgend ausgewertet. Dabei werden in dem Schritt S20 die Anzahl der dunklen Pixel pro Schnittfläche betrachtet.

Ausgehend davon erfolgt im Schritt S21 eine Berechnung der Mittelwerte der Segmente pro Filter, im Schritt S22 eine Berechnung der Abweichung der Segmente zum Mittelwert pro Filter und im Schritt S23 eine Bildung der Summe aus den Abweichungen der Segmente zum Mittelwert pro Filter. In dem Schritt S24 erfolgt eine Darstellung der Summe der Abweichungen über die Filter beispielsweise in einem Diagramm. In dem Schritt S25 erfolgt schließlich eine Bildung des Mittelwerts über die betrachteten beispielsweise zehn Filter.

Alternativ oder zusätzlich zu den Schritten S21 bis S25 erfolgt in dem Schritt S26 eine Bildung der Summe der dunklen Pixel pro Filter und in dem Schritt S27 eine Bildung des Mittelwerts über die betrachteten beispielsweise zehn Filter. In dem Schritt S28 erfolgt anschließend eine Berechnung der Abweichung der Pixel pro Filter zum Mittelwert. In dem Schritt S29 erfolgt eine Darstellung der Abweichung der Pixel zum Mittelwert. In dem Schritt S30 erfolgt schließlich eine Bildung des Mittelwerts über die Filter.

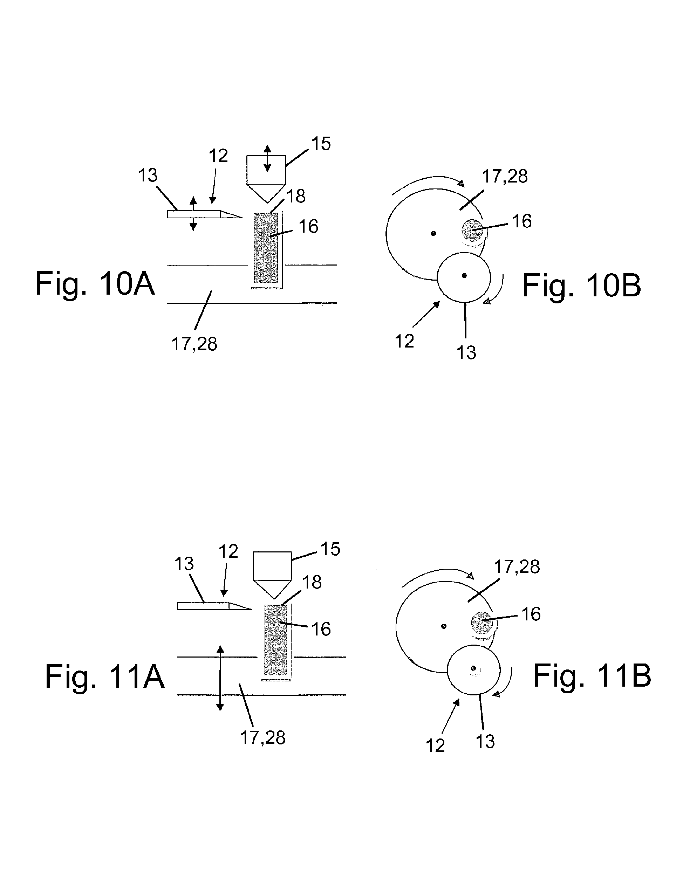

Eine Ausführungsform einer erfindungsgemäßen Vorrichtung 10 ist in Figur 10A (Ansicht senkrecht zur Stabachse) bzw. Figur 10B (Ansicht parallel zur Stabachse) schematisch gezeigt. Der zu untersuchende stabförmige Artikel 16 ist beispielsweise auf einer drehbaren Aufnahme 28 gehalten, die hier den Manipulator 17 bildet. Die Rotationsrichtungen der Aufnahme 28 und des Kreismessers 12 können gleich- oder gegenläufig sein. Die Schneideinrichtung 13 bzw. das Messer 12 ist dabei so überlappend zu der Aufnahme 28 angeordnet, dass der Artikel 16 infolge der Rotation der drehbaren Aufnahme 28 durchgeschnitten wird, um eine Schnittfläche 18 zu erzeugen, siehe Figur 10B. Die Schneideinrichtung 13 bzw. das Messer 12 ist in dieser Variante entlang der Längsachse des stabförmigen Artikels 16 relativ zu diesem bewegbar. Nach jedem axialen Vorschub der Schneideinrichtung 12 und jedem entsprechenden Schnitt senkrecht zur Längsachse des Artikels 16 wird der abgeschnittene Teil des Artikels 16 entsorgt, beispielsweise mittels eines Luftimpulses. Die Schnittflächen 18 werden nach Erzeugung jeweils mit der Kamera 15 aufgenommen.

Um den Abbildungsmaßstab der Kamera 15 zu der zu inspizierenden Stirnfläche 18 konstant zu halten, ist die Kamera 15 vorteilhaft ebenfalls entlang der Längsachse des stabförmigen Artikels 16 verschiebbar, siehe Figur 10A. Zu diesem Zweck sind die Kamera 15 und die Schneideinrichtung 12 vorzugsweise auf derselben (nicht gezeigten) Bewegungseinrichtung, insbesondere eine elektromotorisch angetriebene Linearführung, befestigt. Alternativ ist es möglich, die Kamera 15 und die Schneideinrichtung 12 separat zu verschieben. Eine weitere Alternative besteht darin, eine Autofokussierung für die Kamera 15 vorzusehen; dies hat den Vorteil, dass die Kamera 15 selbst nicht verschiebbar sein muss.

Eine weitere Ausführungsform einer erfindungsgemäßen Vorrichtung 10 ist in Figur 11A (Ansicht senkrecht zur Stabachse) bzw. Figur 11B (Ansicht parallel zur Stabachse) schematisch gezeigt. In dieser Variante sind der Manipulator 17 bzw. die Aufnahme 28 und somit der Artikel 16 selbst entlang seiner Längsachse bewegbar. Nach jedem axialen Vorschub der Schneideinrichtung 12 und jedem entsprechenden Schnitt senkrecht zur Längsachse des Artikels 16 wird der abgeschnittene Teil des Artikels 16 entsorgt, beispielsweise mittels eines Luftimpulses. Die Schnittflächen 18 werden nach Erzeugung jeweils mit der Kamera 15 aufgenommen. Diese Ausführungsform kann gegenüber der aus den Figuren 10A, 10B zu bevorzugen sein, weil die Schneideinrichtung 12 bzw. die Kamera 15 fest montiert sein können.

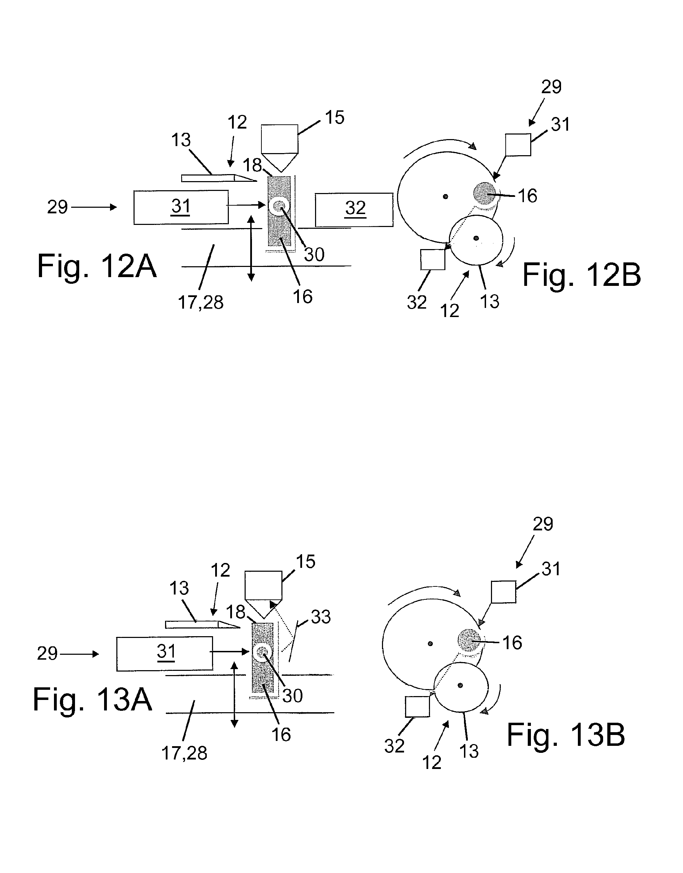

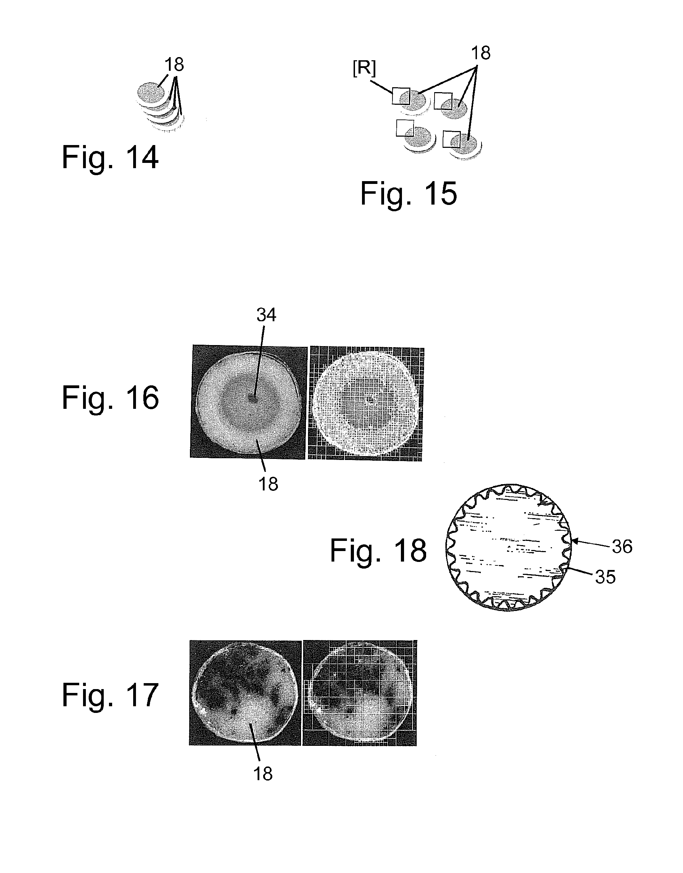

Eine weitere Ausführungsform einer erfindungsgemäßen Vorrichtung 10 ist in Figur 12A (Ansicht senkrecht zur Stabachse) bzw. Figur 12B (Ansicht parallel zur Stabachse) schematisch gezeigt. Die Vorrichtung 10 umfasst in dieser Variante eine Durchleuchtungseinrichtung 29 für die Bestimmung der Positionen einer inneren Struktur in dem Artikel 16. Dies kann beispielsweise die Position von eingebrachten Objekten wie Kapseln 30 (Figuren 12A, 13A) oder einem Faden 34 (Figur 16), rillenförmige Hohlräumen 35 in einem Profilfilterstab 36 (Figur 18), oder Materialübergängen, beispielsweise in Multisegmentfilterstäben, sein.

Die bestimmte Position der inneren Struktur wird vorteilhaft für die automatisierte Bestimmung optimaler Schnittpositionen in dem stabförmigen Artikel 16 verwendet, auf deren Grundlage die Schneideinrichtung 12 betrieben wird. Die Durchleuchtungseinrichtung 29 kann eine optische Einrichtung sein, vorzugsweise arbeitend mit Licht im sichtbaren Wellenlängenbereich. Alternativ kann die Durchleuchtungseinrichtung 29 einen Mikrowellensensor (MIDAS^{®}) oder eine Infrarotdurchleuchtung (IRIS^{®}) umfassen.

In dem Ausführungsbeispiel der Figuren 12A, 12B ist eine optische Durchleuchtung eines Filterstabs 16 mit einem in das Filtertow eingebrachten inneren Objekt 30, beispielsweise einer Kapsel, gezeigt. Die modulare adaptive Durchleuchtungseinrichtung 29 umfasst hier einen vorzugsweise modularen optischen Sender 31 zum Aussenden von Licht insbesondere im sichtbaren Wellenlängenbereich und einen vorzugsweise modularen optischen Empfänger 32. Mit Hilfe des Senders 31 wird der Artikel 16 durchleuchtet. Der Empfänger 32 leitet das vom Sender 31 empfangene Signal zu einer Auswertung für die Bestimmung der Positionen der inneren Struktur weiter. Diese Auswertung kann beispielsweise in der Auswerteeinrichtung 23 erfolgen.

Aus der ermittelten Position der inneren Struktur können Schnittpositionen ermittelt und zur Steuerung der Schneideinrichtung 32 verwendet werden. Die Schnittpositionen werden im vorliegenden Fall vorteilhaft so gewählt, dass das eingelegte Objekt 30 in dem Filterstab 16 nicht beschädigt wird. Die Schnittpositionen können manuell oder automatisch in der Auswerteeinrichtung 23 gewählt werden.

In dem alternativen Ausführungsbeispiel der Figuren 13A, 13B wird die Kamera 15 als Empfänger zum Empfangen des von dem Sender 31 gesendeten Signals verwendet. Ein separater Empfänger 32 ist dann entbehrlich. Zur Umlenkung des durch den Artikel 16 hindurchgetretenen Lichtstrahls in die Kamera 15 kann beispielsweise ein Spiegel 33 vorgesehen sein.

Da nicht alle zu untersuchenden Artikel 16 mit Licht bzw. sichtbarem Licht durchleuchtet werden können, kann für die Durchleuchtungseinrichtung 29 auch ein Mikrowellensender / -empfänger verwendet werden. Alternativ oder zusätzlich lassen sich weitere mögliche Sensoren für die Positionsbestimmung nutzen, beispielsweise Wärmesignatur-Sensoren, Sensoren zur Schall- oder Klanganalyse etc.

In den Ausführungsformen der Figuren 12A, 12B, 13A, 13B ist der Manipulator 17 bzw. die Aufnahme 28 und somit der Artikel 16 entlang seiner Längsachse analog zu den Figuren 11A, 11B verschiebbar. Alternativ kann in den Ausführungsformen der Figuren 12A, 12B, 13A, 13B die Schneideinrichtung 12 und gegebenenfalls die Kamera 15 analog zu den Figuren 10A, 10B verschiebbar sein.

Im Folgenden werden Auswertungen von mit den Vorrichtungen gemäß Figuren 10A bis 13B erzeugten axial versetzten Schnittflächen 18 anhand der Figuren 14 bis 17 beispielhaft erläutert. Die erhaltenen axialen Schichtaufnahmen können wie in Figur 14 gezeigt einzeln ausgewertet und entsprechende Qualitätsmerkmale erzeugt werden.

Die erhaltenen axialen Schichtaufnahmen können wie in Figur 15 gezeigt auch gemeinsam bzw. kombiniert ausgewertet werden. Dabei werden vorzugsweise gleiche Regionen [R] pro Schicht [s] zusammen ausgewertet, d.h. sämtliche Regionen [R₁...Rₙ] bilden ein einheitliche Qualitätsmerkmal.

Im Folgenden wird eine vorteilhafte allgemeine Auswertemethode dargelegt.

Im Allgemeinen ergeben sich [S₁...Sₙ] Schichtaufnahmen, d.h. Aufnahmen axial versetzter Schnittflächen, und [R₁...Rₙ] Regionen innerhalb jeder Schichtaufnahme.

Auf jede Aufnahme wird ein einzelnes, vorher definiertes passendes Raster [RS] gelegt. Das Raster kann symmetrisch sein, d.h. mit gleichen Rastergrößen, beispielsweise in Abstufungen 3x3, 4x4 usw., oder asymmetrisch mit verschiedenen Rastergrößen. Die Raster können bei Bedarf auch überlappen. Figur 16 zeigt ein Beispiel eines asymmetrischen Rasters (rechte Seite in Figur 16) auf einer Schichtaufnahme eines Filters 16 mit einem eingelegten Faden 34 (linke Seite in Figur 16). Figur 17 zeigt ein Beispiel eines asymmetrischen Rasters (rechte Seite in Figur 17) auf einer Schichtaufnahme eines mit Aktivkohle versetzten Filters 16 (linke Seite in Figur 17).

Für jede einzelne Schicht [Si] werden dann pro Raster [RS] passende Rastereigenschaften [RE] berechnet. Für einen vollständigen Artikel 16 kann man dann vorteilhaft die mittlere, maximale und minimale Abweichung pro Raster und alle Schichten ermitteln. Dies erfolgt vorteilhaft in einer Lernphase einmal vorab für einen guten Artikel. D.h. für die Rastereigenschaften RE₁...REₛ werden berechnet:
Rⱼₘₐₓ=max[S₁{R₁...Rᵢ}...Sₙ{R₁...Rᵢ}] für i=1... (Anzahl Raster) und n=1... (Anzahl Schichten)
Rⱼₘᵢₙ=min [S₁{R₁...Rᵢ}...Sₙ{R₁...Rᵢ}] für i=1... (Anzahl Raster) und n=1... (Anzahl Schichten)
usw. für alle s=1 bis (Anzahl Eigenschaften).

Rastereigenschaften bzw. lokale Varianzen können durch mehrere Kriterien erzeugt werden, z.B. als Histogramm pro Raster, und daraus abgeleitet arithmetischer Mittelwert pro Raster und/oder als Standardabweichung pro Raster; Schwerpunkt im Raster; Schwerpunkt über alle Schichten; Anzahl Figuren mit passender Form. Alternativ Pixelanzahl nach Binarisierung pro Raster, wenn ein bestimmter Farbwertebereich für die Bewertung ausreicht.

Ein zusätzlicher Vorteil dieser Methode besteht in der Unabhängigkeit von der Rotationslage des stabförmigen Artikels 16. Das Raster wird dabei als konstant angenommen und wird bei einem runden Körper vorteilhaft rotationssymmetrisch gewählt. Die vorgesehene Verteilung beispielsweise von eingebrachten Kohlepartikeln pro Raster soll während der Produktion konstant sein. Unter diesen Bedingungen ist die Kontrolle des Artikels unabhängig von der Rotationslage. Es wird zwar nicht immer die gleiche Region im gleichen Raster vermessen, dies bleibt aber ohne Einfluss, da die Qualitätskriterien pro Raster und Ort gleich anzuwenden sind.

Ist eine asymmetrische Verteilungsüberwachung erforderlich, ist das Schichtbild des stabförmigen Artikels anhand dieser Asymmetrie zum passenden Rasterabschnitt auszurichten.

Folgende Ziele der Auswertung sind einzeln oder in Kombination vorteilhaft zu erreichen:
- Die Schichtaufnahmen werden von Artikel zu Artikel möglichst an unterschiedlichen Positionen durchgeführt, um systembedingte Schwankungsfehler zu erkennen bzw. inhomogene Schwankungen innerhalb eines Artikels 16 zu bewerten.
- Die Schichtaufnahmen werden von Artikel zu Artikel immer an der gleichen Position durchgeführt, um genau an dieser Position im Inneren des Artikels 16 eine Prüfung durchzuführen, beispielsweise im Fall von inneren Kapselkammern, inneren Rillenbereichen von Profilfiltern oder anderen Multisegmenten mit festgelegtem Aufbau.
- Jede Schichtaufnahme erzeugt ein individuelles Qualitätskriterium (Figur 14), wenn die Schichten inhaltlich keinen Zusammenhang bilden, beispielsweise wenn von dem gleichen Artikel [1...n] Schichtbilder zur Aktivkohleverteilung und [1...n] Schichtbilder einer zusätzlich vorhandenen Kapsel- und/oder Hohlfilterkammer vorliegen.
- Mehrere Schichtaufnahmen werden zu einem gemeinsamen Qualitätskriterium zusammengefasst, beispielsweise bei der Überwachung eines Fadens in einer festgelegten Region [R] über mehreren Schichten innerhalb eines Artikels 16 (Figur 15).
- Grobe Tiefenvermessungen von Kammern bzw. Längenschätzungen von eingebrachten Materialien auf der Grundlage der Schnittbreiten für die einzelnen Schichten.

## Patentansprüche

1. Verfahren zur Ermittlung, Vermessung und/oder Bewertung einer Eigenschaft eines stabförmigen Artikels der Tabak verarbeitenden Industrie, umfassend die optische Erfassung mindestens eines Bildes des Artikels, und elektronische Auswertung des erfassten Bildes, **dadurch gekennzeichnet, dass** mindestens eine Schnittfläche des Artikels optisch erfasst wird, wobei eine Mehrzahl von Bildbereichen der mindestens einen Schnittflächenabbildung jeweils separat ausgewertet wird.

2. Verfahren nach Anspruch 1, **dadurch gekennzeichnet, dass** eine Umfangslinie (27) des Artikels bestimmt wird.

3. Verfahren nach einem der vorangehenden Ansprüche, **dadurch gekennzeichnet, dass** eine Schnittflächenabbildung in mehrere Unterbereiche unterteilt wird, wobei vorzugsweise jeder Unterbereich mindestens 1000 Bildpixel aufweist.

4. Verfahren nach Anspruch 3, **dadurch gekennzeichnet, dass** die Unterbereiche Sektoren bilden.

5. Verfahren nach Anspruch 3 oder 4, **dadurch gekennzeichnet, dass** die Unterbereiche konzentrische Ringe bilden.

6. Verfahren nach einem der vorangehenden Ansprüche, **dadurch gekennzeichnet, dass** Abbildungen einer Mehrzahl von axial beabstandeten Schnittflächen ausgewertet werden.

7. Verfahren nach einem der vorangehenden Ansprüche, **dadurch gekennzeichnet, dass** sämtliche auszuwertenden Bildbereiche jeweils gleiche Flächen aufweisen.

8. Verfahren nach einem der vorangehenden Ansprüche, **dadurch gekennzeichnet, dass** die zu untersuchenden Schnittflächen mittels eines Kreismesserschnitts erzeugt werden.

9. Verfahren nach einem der vorangehenden Ansprüche, **dadurch gekennzeichnet, dass** für jeden auszuwertenden Bildbereich die Anzahl der Bildpixel ermittelt wird, deren Wert einen bestimmten Helligkeitsschwellwert unter- oder überschreitet.

10. Verfahren nach Anspruch 9, **dadurch gekennzeichnet, dass** für jeden Unterbereich eine Abweichung Δ der ermittelten Pixelanzahl von einem Sollwert bestimmt wird und vorzugsweise eine Summe ∑Δ der Abweichungen Δ sämtlicher Bereiche gebildet wird.

11. Vorrichtung (10) zur Ermittlung, Vermessung und/oder Bewertung einer Eigenschaft eines stabförmigen Artikels (16) der Tabak verarbeitenden Industrie, umfassend eine optische Bilderfassungseinrichtung (14) zur Erfassung mindestens eines Bildes des Artikels (16), und eine elektronische Auswerteeinrichtung (23) zur Auswertung des erfassten Bildes, **dadurch gekennzeichnet, dass** die Bilderfassungseinrichtung (14) eine Kamera (15) zur optischen Erfassung mindestens einer Schnittfläche des Artikels (16) und die Auswerteeinrichtung (23) zur jeweils separaten Auswertung einer Mehrzahl von Bildbereichen der mindestens einen Schnittflächenabbildung des Artikels umfasst.

12. Vorrichtung nach Anspruch 11, **dadurch gekennzeichnet, dass** die Vorrichtung ein Kreismesser (13) zur Erzeugung der zu untersuchenden Schnittfläche des Artikels (16) umfasst.

13. Vorrichtung nach Anspruch 11 oder 12, umfassend eine Durchleuchtungseinrichtung (29) zur Bestimmung der Positionen einer inneren Struktur (30; 34; 35) in dem stabförmigen Artikel (16).

14. Vorrichtung nach Anspruch 13, **dadurch gekennzeichnet, dass** die Position der inneren Struktur zur automatisierten Bestimmung optimaler Schnittpositionen in dem stabförmigen Artikel (16) verwendet wird, auf deren Grundlage eine Schneideinrichtung (12) betrieben wird.

15. Vorrichtung nach einem der Ansprüche 11 bis 14, **dadurch gekennzeichnet, dass** die Vorrichtung einen Manipulator (17) zum Ausrichten des Artikels (16) in wenigstens zwei Achsen und ein verstellbares Führungsrohr (25) zum längsaxialen Positionieren des Artikels (16) aufweist.
